# EUROPÄISCHE PATENTSCHRIFT

(11) **EP 2 271 516 B1**
(45) Veröffentlichungstag und Bekanntmachung des Hinweises auf die Patenterteilung: **12.12.2018**
(21) Anmeldenummer: 09732143.4
(22) Anmeldetag: 16.04.2009
(51) Int. Cl.: B60R 11/02, B60R 11/00, B60R 13/00

(54) **STAUFACH**
STORAGE COMPARTMENT
TIROIR DE RANGEMENT

(30) Priorität: 16.04.2008 DE 102008019867
(43) Veröffentlichungstag der Anmeldung: 12.01.2011
(73) Patentinhaber: Faurecia Innenraum Systeme GmbH, 76767 Hagenbach (DE)
(72) Erfinder: SEILLER, Julien, 76185 Karlsruhe (DE); ALLARD, Nicolas, F-16590 Brie (FR); BENARD, Thierry, F-60000 Beauvais (FR); PEGORIER, Nicolas, F-93400 Saint-Ouen (FR)
(74) Vertreter: Pfenning, Meinig & Partner mbB
(86) Internationale Anmeldenummer: PCT/EP2009/002973
(87) Internationale Veröffentlichungsnummer: WO 2009/127439

(56) Entgegenhaltungen:
- EP-A2- 0 795 437
- WO-A1-2005/077709
- DE-A1- 10 048 587
- DE-U1- 20 215 067
- FR-A1- 2 755 921
- US-B1- 6 366 672
- US-B2- 7 240 941

## Beschreibung

Die Erfindung betrifft ein Staufach für einen Fahrzeuginnenraum nach dem Oberbegriff des Hauptanspruchs. Die Erfindung betrifft ferner ein Verkleidungsteil für einen Fahrzeuginnenraum mit einem entsprechenden Staufach.

Derartige Staufächer mit einem zwischen einer vollständig geschlossenen und einer maximal geöffneten Position schwenkbaren Deckel und einem bei geschlossenem Deckel darunter verborgenen Boden sind an sich bekannt, beispielsweise in Form von Handschuhfächern, die in Instrumententafeln integriert sind. In solchen Staufächern können Gegenstände während einer Fahrt sicher verstaut werden, so dass ein Herumfliegen dieser Gegenstände im Fall eines Aufpralls oder einer scharfen Bremsung verhindert werden kann.

Ein solches Staufach, dessen Deckel auch in Zwischenpositionen zwischen einer vollständig geschlossenen und einer ganz aufgeklappten Position arretiert werden kann, ist z.B. in der Druckschrift US 7 240 941 B2 beschrieben.

Unabhängig davon ist es bekannt, vom entsprechenden Fahrzeug unabhängige Zusatzgeräte wie beispielsweise Mobiltelefone, mobile Navigationsgeräte oder andere Handgeräte, insbesondere für drahtlose Kommunikation ausgelegte Handgeräte (sogenannte Nomadic Devices) provisorisch in einem Fahrzeuginnenraum so zu befestigen, dass sie während der Fahrt bedient werden können. Nur eine von vielen Möglichkeiten besteht dabei z. B. in einer Verwendung von Saugnäpfen oder, wie in der Druckschrift US 6 366 672 B1 gezeigt, im Einstecken in einen Zigarettenanzünder. Derart nur provisorisch im Fahrzeuginnenraum befestigte Geräte lösen sich jedoch in aller Regel schon bei einem nur leichten Aufprall und bilden dann, frei durch den Fahrzeuginnenraum fliegend, eine große Gefahr für Fahrzeuginsassen. Dieser Gefahr kann herkömmlicherweise nur durch ein sicheres Verstauen solcher Geräte, beispielsweise in verschließbaren Staufächern, begegnet werden, wobei dann nachteiliger Weise eine Bedienung der Geräte während der Fahrt nicht mehr möglich ist.

Staufächer sind im Stand der Technik hinlänglich bekannt. So zeigt beispielsweise die US 7 240 941 B2 ein Staufach mit einem Deckel, welcher in verschiedenen Positionen fixiert werden kann. Weitere derartige Staufächer sind beispielsweise auch in der Druckschrift DE 202 15 067 U1 zu finden.

Der vorliegenden Erfindung liegt also die Aufgabe zugrunde, eine Maßnahme vorzuschlagen, mit der Geräte beschriebener Art, die nicht zur festen Ausstattung eines Fahrzeugs gehören, so in einem Fahrzeuginnenraum provisorisch - also jederzeit lösbar - anzubringen sind, dass sie während einer Fahrt von Fahrzeuginsassen bedient werden können und gleichzeitig so sicher fixiert sind, dass sie sich auch im Fall eines Aufpralls nicht lösen und damit keine Gefahr für die Fahrzeuginsassen darstellen. Der Erfindung liegt ferner die Aufgabe zugrunde, ein Verkleidungsteil mit einem entsprechenden Staufach zu entwickeln.

Diese Aufgabe wird erfindungsgemäß gelöst durch ein Staufach mit den kennzeichnenden Merkmalen des Hauptanspruchs in Verbindung mit den Merkmalen des Oberbebegriffs des Hauptanspruchs sowie durch ein Verkleidungsteil gemäß Anspruch 11. Vorteilhafte Ausgestaltungen und Weiterentwicklungen der Erfindung ergeben sich mit den Merkmalen der Unteransprüche.

Es wird also vorgeschlagen, dass der Deckel bei einem Staufach eingangs beschriebener Art zumindest innerhalb eines Teilbereichs eines Bewegungsspielraums zwischen der vollständig geschlossenen und der maximal geöffneten, typischerweise nach oben aufgeschwenkten, Position des Deckels in jeder beliebigen Zwischenposition arretierbar ist zum Halten eines Gegenstands zwischen dem Boden und dem Deckel. Das erlaubt, ein Gerät oben genannter Art unabhängig von einer genauen Größe dieses Gerätes so zwischen dem Boden des Staufachs und dem dann typischerweise halb geöffneten Deckel einzuklemmen, dass das Gerät ausgesprochen sicher fixiert ist und gleichzeitig eine typischerweise vorhandene Bedienoberfläche des Gerätes für einen Fahrzeuginsassen erreichbar ist, ohne dass dieser das Gerät aus seiner Fixierung lösen müsste. Auch eine eventuell auf dem Gerät vorhandene Anzeige kann dann bei geschickt positioniertem Gerät für einen Fahrer oder einen anderen Fahrzeuginsassen problemlos einsehbar sein. Ein so zwischen dem Deckel und dem Boden gehaltener Gegenstand wird typischerweise direkten Kontakt mit dem Boden des Staufachs haben, kann jedoch stattdessen auch mit einem unteren Ende auf einer oberhalb des Bodens angeordneten Stütze oder Haltelasche ruhen. Das vorgeschlagene Staufach eignet sich ferner selbstverständlich nicht nur zum Fixieren von Gegenständen in beschriebener Weise, sondern kann darüber hinaus auch wie ein gewöhnliches Staufach zum Verstauen von Gegenständen verwendet werden und ist insofern vorteilhaft vielseitig einsetzbar.

Eine konstruktiv besonders einfache Ausführung ergibt sich, wenn der Deckel um eine einfache Schwenkachse aufschwenkbar ist. Für andere Anwendungen kann eine Kinematik des Deckels wünschenswert sein, die eine Aufschwenkbewegung mit einer translatorischen Komponente erlaubt. Dazu kann der Deckel um ein Doppelgelenk aufschwenkbar ausgeführt sein oder auch mittels eines Viergelenks angelenkt sein. Ein solches Viergelenk, das z. B. durch zwei oder vier zwischen dem Deckel und einem Träger angeordnete schwenkbare Schenkel realisiert sein kann, bringt den Vorteil einer ausgesprochen robusten Anbindung des Deckels mit sich.

Um eine Arretierbarkeit des Deckels in den Zwischenpositionen mit geringem Aufwand zu realisieren, kann mindestens ein Gelenk, um das der Deckel aufschwenkbar ist, eine lösbare, das Gelenk in einer Verriegelungsposition formschlüssig blockierende Verriegelung aufweisen. Außerdem kann es vorteilhaft sein, wenn der Deckel durch eine den Deckel öffnende oder schließende Federkraft belastet ist. Eine solche Federkraft, die durch eine einfache, mit mindestens einem Gelenk des Deckels zusammenwirkende Feder realisiert sein kann, kann im ersten Fall ein Öffnen des Staufachs erleichtern und im zweiten Fall bei einem Fixieren des Gegenstands zwischen dem Boden und dem Deckel helfen. Unter Umständen kann es zum Arretieren des Deckels in der Zwischenposition dann genügen, wenn eine Gegenkraft der den Deckel schließenden Federkraft durch den zu haltenden Gegenstand selbst ausgeübt wird. Ein eigener Verriegelungsmechanismus kann sich dann sogar erübrigen. Im Hinblick auf eine möglichst sichere Fixierung des Gegenstands sind jedoch Ausführungen der Erfindung zu bevorzugen, bei der sich der Deckel unabhängig von einem zwischen Boden und Deckel angeordneten Gegenstand in jeder der genannten Zwischenpositionen arretieren lässt.

Die Formulierung, der zufolge der Deckel zumindest innerhalb des genannten Teilbereichs in jeder beliebigen Zwischenposition arretierbar ist, soll die Möglichkeit umfassen, dass zwischen benachbarten Zwischenpositionen, in denen der Deckel arretiert werden kann, zwar ein endlicher Abstand besteht, dieser jedoch einen Betrag von 1 mm nicht überschreitet. Zu bevorzugen ist jedenfalls eine stufenlos wählbare Zwischenposition, was in jedem Fall dann realisierbar ist, wenn keine formschlüssig blockierende Verriegelung, sondern eine den Deckel durch Kraftschluss arretierende Gelenkbremse vorgesehen wird.

Um eine möglichst sichere Fixierung des zu haltenden Gegenstands zwischen dem Boden und dem Deckel zu ermöglichen und diesen Gegenstand auch formschlüssig zu halten, kann der Deckel an einer dem Boden zugewandten Innenseite mehrere parallel zueinander und zu mindestens einer Gelenkachse des Deckels angeordnete Stege aufweisen. Diese Stege können elastisch eindrückbar ausgeführt sein, beispielsweise in Gestalt von zwischen zwei Anbindungspunkten frei verlaufenden Bügeln, um ein möglichst komfortables Fixieren des Gegenstands in dem teilweise geöffneten Staufach zu ermöglichen. Alternativ oder zusätzlich können die Stege dazu auch mit einer flexiblen Abdeckung überzogen sein, beispielsweise mit einer elastomeren Folie.

Ein noch komfortableres und auch einhändig durchführbares Fixieren des Gegenstands zwischen dem Deckel und dem Boden wird erfindungsgemäß ermöglicht, indem auf dem Boden des Staufachs eine um mindestens ein Gelenk hochschwenkbare Stütze für den zwischen dem Boden und dem Deckel zu haltenden Gegenstand angeordnet wird. Dann kann der Gegenstand zunächst gegen diese Stütze gelehnt werden, um anschließend durch ein Zuschwenken des Deckels fixiert zu werden. Für eine noch sicherere Fixierung des Gegenstands kann die Stütze außerdem mit mindestens einer Haltelasche für den zu haltenden Gegenstand und/oder mit einer ein Haftkissen oder eine Haftfolie oder eine Magnetfläche oder eine hinreichend glatte Saugfläche für einen Saugnapf aufweisenden Stützwand ausgeführt werden. Wenn die Stützwand eine Magnetfläche aufweist, also eine permanent magnetische Schicht umfasst oder einen Elektromagneten aufweist, der ein magnetisches Feld an einer Oberfläche der Stützwand erzeugen kann, lassen sich Gegenstände aus magnetisierbarem Material besonders einfach zwischen dem Deckel und dem Boden platzieren.

Eine besonders vielseitige Verwendungsmöglichkeit des Staufachs lässt sich erreichen, wenn eine solche Stütze ferner eine als Stützwand für den Gegenstand dienende Platte umfasst, die in zwei durch Vertauschen von einer Vorder- und einer Rückseite der Platte voneinander unterschiedenen Orientierungen an einem Gestell der Stütze zu befestigen ist, wobei die Platte an der Vorderseite mindestens eine Haltelasche und an der Rückseite eine durch ein Haftkissen oder eine Haftfolie oder eine Magnetfläche oder eine Saugfläche für einen Saugnapf gebildete Oberfläche aufweist. Eine solche Platte kann z. B. so ausgeführt sein, dass sie von oben in eine Schiene oder zwei Schienen des Gestells eingeschoben werden kann. Je nach Abmessung und Oberflächeneigenschaft eines zu haltenden Gegenstands kann die Platte dann so orientiert werden, dass der Gegenstand an der Vorder- oder an der Rückseite zu liegen kommt, je nachdem, wo ein besserer Halt gewährleistet ist.

Innerhalb des Staufachs kann zusätzlich eine Buchse für ein Versorgungskabel, beispielsweise eine 12V-Buchse, vorgesehen sein, um eine Spannungsversorgung des zwischen dem Deckel und dem Boden eingeklemmten Gegenstands zu ermöglichen, wenn es sich dabei um ein elektrisches oder elektronisches Gerät wie beispielsweise ein Nomadic Device handelt. Alternativ oder zusätzlich können auch andere Buchsen innerhalb des Staufachs vorgesehen sein, beispielsweise eine Buchse für ein Signalkabel. In diesen Fällen ist in vorteilhafter Weise eine Versorgung oder Anbindung eines mittels des Staufachs fixierten Gerätes in der Weise möglich, dass dieses Gerät nach einem Gebrauch in sehr einfacher Weise durch vollständiges Schließen des Staufachs in dem Staufach verstaut werden kann, ohne dass es dazu ausgestöpselt werden müsste. Eine vorteilhafte Weiterbildung sieht vor, dass in unmittelbarer Nähe einer Buchse beschriebener Art innerhalb des Staufachs ein weiteres, eventuell abdeckbares Unterfach vorgesehen ist, in dem ein zur Buchse korrespondierendes und ggf. dort eingestecktes Kabel verstaut werden kann. Dieses Unterfach kann beispielsweise in den Boden des eigentlichen Staufachs eingelassen sein.

Typischerweise ist ein Staufach beschriebener Art Bestandteil eines entsprechend gestalteten Verkleidungsteils für einen Fahrzeuginnenraum, bei dem es sich beispielsweise um eine Instrumententafel oder eine Mittelkonsole oder einen Teil einer Instrumententafel oder einer Mittelkonsole handeln kann.

Ausführungsbeispiele der Erfindung werden nachfolgend anhand der Figuren 1 bis 6 erläutert. Es zeigen
- Fig. 1: eine perspektivische Ansicht eines Staufachs in einer Ausführung der Erfindung,
- Fig. 2: einen Längsschnitt durch das Staufach aus Fig. 1,
- Fig. 3: eine perspektivische Darstellung eines Details eines entsprechenden Staufachs in einer Abwandlung des Ausführungsbeispiels aus den Fign. 1 und 2,
- Fig. 4: einen Längsschnitt durch ein Staufach in einer anderen Ausführung der Erfindung,
- Fig. 5: eine perspektivische Ansicht einer in das Staufach aus Fig. 4 integrierten Stütze und
- Fig. 6: einen Längsschnitt durch ein weiteres Ausführungsbeispiel für ein vergleichbares Staufach.

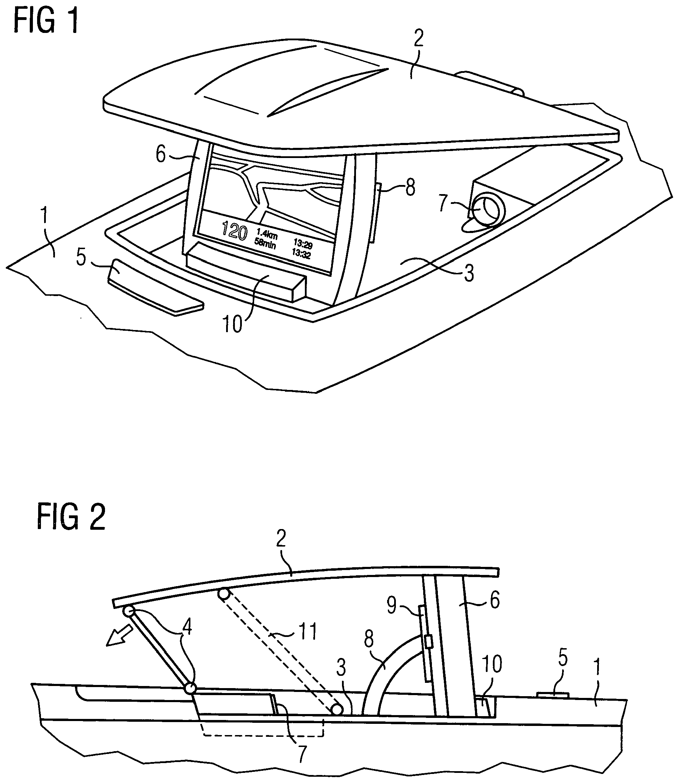

Das in Fig. 1 gezeigte Staufach ist an einer Oberseite einer Instrumententafel 1 eines Personenkraftwagens angeordnet, in die es integriert ist. Dieses Staufach, das alternativ auch ein einer Mittelkonsole integriert werden kann, weist einen zwischen einer vollständig geschlossenen und einer maximal geöffneten Position schwenkbaren Deckel 2 auf, der in Fig. 1 in einem halb geöffneten Zustand gezeigt ist. Erkennbar ist auch ein Boden 3 des Staufachs, der bei geschlossenem Deckel 2 unter dem Deckel 2 verborgen ist.

Der Deckel 2 ist derart an einem ihn umgebenden und als Träger für den Deckel 2 dienenden Teil der Instrumententafel 1 angelenkt, dass er in jeder beliebigen Zwischenposition zwischen der vollständig geschlossenen und der maximal geöffneten Position des Deckels 2 arretiert werden kann. Im vorliegenden Fall ist der Deckel 2 dazu mittels eines in Fig. 2 erkennbaren Doppelgelenks 4 am umgebenden Teil der Instrumententafel 1 angelenkt, wobei dieses Doppelgelenk 4 zum Arretieren des Deckels 2 eine Gelenkbremse aufweist, die durch Drücken eines vor dem Staufach erkennbaren Druckknopfes 5 lösbar ist, so dass der Deckel 2 nach einem Drücken des Druckknopfes 5 frei auf- oder zuschwenkbar ist, während die Gelenkbremse eine Bewegung des Doppelgelenks 4 verhindert, wenn der Druckknopf 5 nicht gedrückt ist. So kann ein selbst nicht zum Staufach gehöriger Gegenstand 6 zwischen dem Deckel 2 und dem Boden 3 eingeklemmt und damit sicher gehalten werden.

Bei dem in den Figuren beispielhaft gezeigten Gegenstand 6 handelt es sich um ein als Handgerät ausgelegtes Navigationsgerät. In gleicher Weise können auch andere Handgeräte wie beispielsweise Mobiltelefone oder andere Nomadic Devices so zwischen dem Deckel 2 und dem Boden 3 des Staufachs fixiert werden, dass sie einerseits hinreichend sicher gehalten werden, um sich auch bei einem Unfall nicht zu lösen, während sie andererseits gut für einen Fahrzeuginsassen erreichbar und einsehbar sind. In Fig. 1 ist innerhalb des Staufachs auch eine Buchse 7 erkennbar, bei der es sich hier um eine 12V-Spannungsversorgung handelt, in die ein Versorgungskabel eines den Gegenstand 6 bildenden Geräts eingesteckt werden kann. Alternativ oder zusätzlich kann das Staufach auch eine entsprechende Buchse 7 für ein Signalkabel aufweisen. Neben der Buchse 7 ist ferner ein nur in Fig. 2 erkennbares und dort gestrichelt angedeutetes Unterfach in den Boden 3 des Staufachs eingelassen, in dem ein zur Buchse 7 korrespondierendes Kabel verstaut werden kann, wenn es nicht benötigt wird. Dieses Unterfach kann beispielsweise mit einer Klappe verschließbar ausgeführt sein.

In dem in Fig. 2 gezeigten Längsschnitt durch das Staufach aus Fig. 1 ist ferner eine auf dem Boden 3 des Staufachs angeordnete und um ein hier als Schiebegelenk ausgeführtes Gelenk hochschwenkbare Stütze 8 zu erkennen, die eine mit einem Haftkissen oder einer Haftfolie oder einer Saugfläche für einen Saugnapf oder einer Magnetfläche versehene Stützwand 9 aufweist, an die der Gegenstand 6 angelehnt ist. Die Stützwand 9 kann außerdem eine Aufschrift mit einem Sicherheitshinweis zur empfohlenen Verwendung der beschriebenen Fixiermöglichkeit tragen. Zusätzlich umfasst die Stütze 8 eine hier als Leiste am Boden 3 des Staufachs ausgeführte Haltelasche 10 für den zu haltenden Gegenstand 6.

Bei einer leichten Abwandlung des bislang beschriebenen Staufachs kann der Deckel 2 durch ein Viergelenk angelenkt sein, das sich durch Vorsehen zweier zusätzlicher Schenkel 11 ergibt, von denen einer in Fig. 2 gestrichelt eingezeichnet ist. Auch kann es vorgesehen sein, dass anstelle der zuvor erwähnten Gelenkbremse eine das Doppelgelenk 4 oder das an dessen Stelle tretende Viergelenk formschlüssig blockierende und durch den Druckknopf 5 lösbare Verriegelung zum Arretieren des Deckels 2 in der vollständig geschlossenen, der maximal geöffneten oder jeder beliebigen dazwischenliegenden Position dient. Bei dem vorliegenden Ausführungsbeispiel ist der Deckel 2 außerdem durch eine diesen Deckel 2 nach einem Drücken des Druckknopfs 5 öffnende Federkraft belastet, wozu das Doppelgelenk 4 mit einer einfachen Feder zusammenwirkt. Bei einer Abwandlung des gezeigten Ausführungsbeispiels kann stattdessen auch eine den Deckel 2 schließende Feder vorgesehen sein, die dann auch einen den Gegenstand 6 haltenden Druck auf diesen zwischen dem Deckel 2 und dem Boden 3 zu haltenden Gegenstand 6 ausübt.

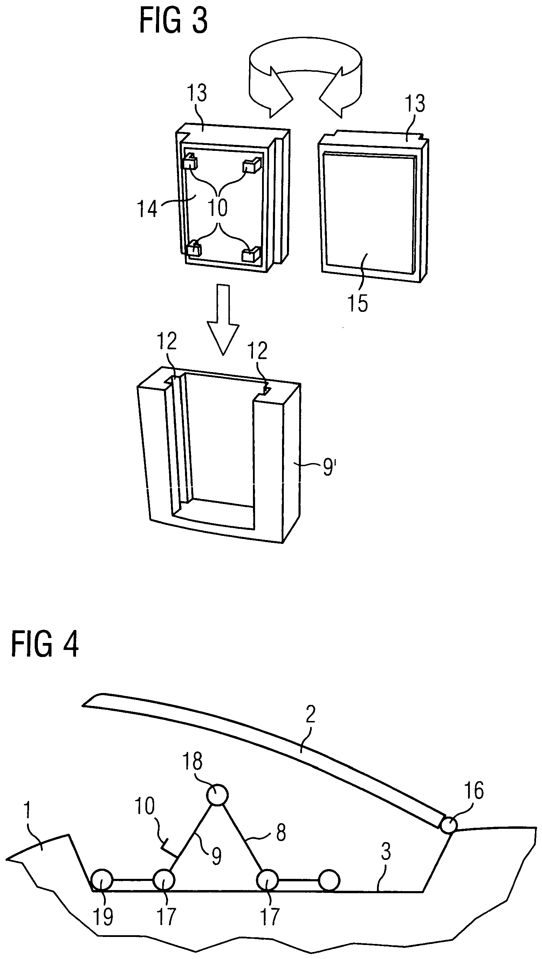

In Fig. 3 sind zwei Komponenten einer der Stütze 8 aus Fig. 2 entsprechenden Stütze für ein entsprechendes Staufach in einer Abwandlung des beschriebenen Staufachs gezeigt. Dort ist eine Halterung 9' zu erkennen, die an die Stelle der Stützwand 9 des Ausführungsbeispiels aus Fig. 2 tritt. Diese Halterung 9' weist zwei nutenförmige Schienen 12 auf, in die eine Platte 13 eingeschoben werden kann, und zwar in zwei unterschiedlichen Orientierungen, die sich durch Vertauschen einer Vorderseite 14 und einer Rückseite 15 der Platte 13 voneinander unterscheiden. An der Vorderseite 14 weist die Platte 13 vier Haltelaschen 10 auf, die zum Halten eines Gerätes definierter Standardabmessungen dienen. Die Rückseite 15 der Platte 13 dagegen wird durch ein Haftkissen oder eine Haftfolie oder eine Magnetfläche oder eine Saugfläche für einen Saugnapf gebildet und gibt anderen Gegenständen 6 bei Bedarf sicheren Halt. In Fig. 3 ist die Platte 13 in beiden Orientierungen dargestellt, in denen sie je nach Bedarf in die Halterung 9' eingeschoben werden kann.

Ein Längsschnitt durch ein anderes Ausführungsbeispiel eines vergleichbaren Staufachs ist in Fig. 4 zu erkennen. Wiederkehrende Merkmale sind dort und in den folgenden Figuren wieder mit denselben Bezugszeichen versehen, ohne jedes Mal im Einzelnen erläutert zu werden. Der aufschwenkbare Deckel 2 ist hier um eine einfache Schwenkachse 16 an der Instrumententafel 1 angelenkt. Auch bei diesem Ausführungsbeispiel wird durch eine Gelenkbremse oder eine lösbare Verriegelung erreicht, dass der Deckel 2 in jeder beliebigen Zwischenposition zwischen einer vollständig geschlossenen und einer maximal geöffneten Position zum Halten eines Gegenstandes zwischen dem Boden 3 und dem Deckel 2 arretierbar ist.

Auch auf dem Boden 3 dieses Staufachs ist eine hier um zwei Gelenke 17 hochschwenkbare Stütze 8 für den zu haltenden Gegenstand angeordnet. Eine zum Anlehnen des zu haltenden Gegenstands vorgesehene Stützwand 9, die wieder eine Haltelasche 10 für den zu haltenden Gegenstand aufweist, ist über ein weiteres Gelenk 18 mit einer weiteren Wand der Stütze 8 verbunden. An einem vorderen Ende 19 kann die Stütze 8 fest am Boden 3 des Staufachs angebunden sein, um ein Zurückrutschen der Stütze 8 zu verhindern. Durch Strecken der Gelenke 17 und 18 lässt sich die Stütze 8 flach an den Boden 3 des Staufachs anlegen, in dem dann noch genug Raum für zu verstauende Gegenstände verbleibt und über dem der Deckel 2 dann vollständig geschlossen werden kann.

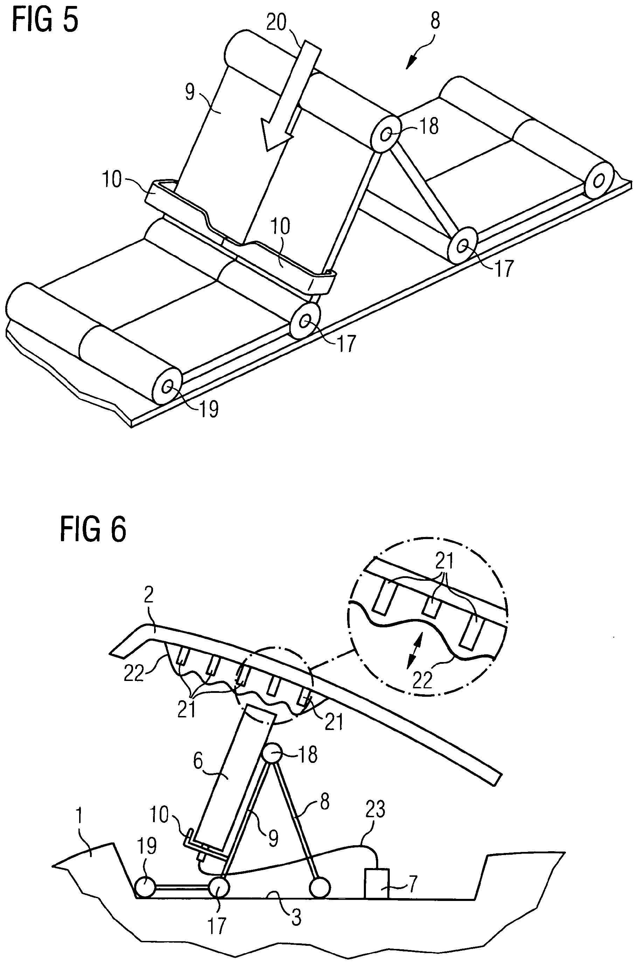

Eine perspektivische Ansicht der Stütze 8 aus Fig. 4 ist in Fig. 5 dargestellt. Ein Pfeil 20 veranschaulicht dort, aus welcher Richtung ein zwischen dem Deckel 2 und dem Boden 3 des Staufachs zu haltender und dabei von außen zugänglich bleibender Gegenstand in die Haltelasche 10 eingeführt werden kann.

Ein weiteres Staufach in einem anderen Ausführungsbeispiel der Erfindung ist schließlich in Fig. 6 dargestellt, wobei wieder eine der Fig. 4 entsprechende Darstellung gewählt ist und wiederkehrende Merkmale mit denselben Bezugszeichen versehen sind. Auch der Deckel 2 dieses Staufachs ist in jeder Zwischenposition zwischen einer vollständig geschlossenen und einer maximal geöffneten Position des Deckels 2 arretierbar. An einer dem Boden 3 des Staufachs zugewandten Innenseite weist der Deckel 2 dieses Staufachs mehrere zueinander und zu mindestens einer, hier nicht abgebildeten Gelenkachse des
Deckels 2 parallel angeordnete Stege 21 auf. Diese Stege sind elastisch eindrückbar, was beim vorliegenden Ausführungsbeispiel dadurch realisiert ist, dass die Stege 21 als senkrecht zur Zeichenebene verlaufende und nur an ihren Enden mit dem Deckel 2 verbundene, beispielsweise durch Metallstreifen gebildete Bügel ausgeführt sind. Darüber hinaus sind die Stege 21 mit einer gemeinsamen, alle Stege 21 überdeckenden flexiblen Abdeckung 22 überzogen, die aus einer elastomeren Folie gebildet ist. Zusammen mit der flexiblen Abdeckung 22 geben die Stege 21 einem zwischen dem Boden 3 und dem Deckel 2 eingeklemmten Gegenstand 6 einen sicheren Halt, nachdem der Deckel 2 oben an den zuvor in die Lasche 10 eingeführten Gegenstand 6 angedrückt und arretiert worden ist. In Fig. 6 ist auch ein Versorgungskabel 23 dargestellt, das in eine Buchse 7 zur Versorgung des Gegenstands 6 mit einer 12V-Spannung eingesteckt ist.

## Patentansprüche

1. Staufach für einen Fahrzeuginnenraum, umfassend einen zwischen einer vollständig geschlossenen und einer maximal geöffneten Position schwenkbaren Deckel (2) und einen bei geschlossenem Deckel (2) darunter verborgenen Boden (3),
wobei der Deckel (2) zumindest innerhalb eines Teilbereichs eines Bewegungsspielraums zwischen der vollständig geschlossenen und der maximal geöffneten Position in jeder beliebigen Zwischenposition arretierbar ist,
**dadurch gekennzeichnet, dass** zum Einklemmen eines Gegenstandes (6) zwischen dem Boden (3) und dem geöffneten Deckel (2) auf dem Boden (3) des Staufachs eine um mindestens ein Gelenk hochschwenkbare Stütze (8) für den zwischen dem Boden (3) und dem Deckel (2) einzuklemmenden Gegenstand (6) angeordnet ist.

2. Staufach nach Anspruch 1, **dadurch gekennzeichnet, dass** der Deckel (2) um eine einfache Schwenkachse (16) oder ein Doppelgelenk (4) aufschwenkbar oder mittels eines Viergelenks angelenkt ist.

3. Staufach nach einem der Ansprüche 1 oder 2, **dadurch gekennzeichnet, dass** mindestens ein Gelenk, um das der Deckel (2) aufschwenkbar ist, zum Arretieren des Deckels (2) in den Zwischenpostionen eine Gelenkbremse oder eine das Gelenk formschlüssig blockierende lösbare Verriegelung aufweist.

4. Staufach nach einem der Ansprüche 1 bis 3, **dadurch gekennzeichnet, dass** der Deckel (2) durch eine den Deckel (2) öffnende oder schließende Federkraft belastet ist.

5. Staufach nach einem der Ansprüche 1 bis 4, **dadurch gekennzeichnet, dass** der Deckel (2) an einer dem Boden (3) zugewandten Innenseite mehrere parallel zueinander und zu mindestens einer Gelenkachse des Deckels (2) angeordnete Stege (21) aufweist.

6. Staufach nach Anspruch 5, **dadurch gekennzeichnet, dass** die Stege (21) elastisch eindrückbar und/oder mit einer flexiblen Abdeckung (22) überzogen sind.

7. Staufach nach einem der vorhergehenden Ansprüche, **dadurch gekennzeichnet, dass** die Stütze (8) mindestens eine Haltelasche (10) für den zu haltenden Gegenstand (6) und/oder eine mit einem Haftkissen oder einer Haftfolie oder einer Saugfläche für einen Saugnapf oder einer Magnetfläche versehene Stützwand (9) aufweist.

8. Staufach nach einem der der vorhergehenden Ansprüche, **dadurch gekennzeichnet, dass** die Stütze (8) eine Platte (13) umfasst, die in zwei durch Vertauschen von einer Vorder- und einer Rückseite (14, 15) der Platte (13) voneinander unterschiedenen Orientierungen an einem Gestell der Stütze (8) zu befestigen ist, wobei die Platte (13) an der Vorderseite (14) mindestens eine Haltelasche (10) und an der Rückseite (15) eine durch ein Haftkissen oder durch eine Haftfolie oder durch eine Saugfläche für einen Saugnapf oder durch eine Magnetfläche gebildete Oberfläche aufweist.

9. Staufach nach einem der vorhergehenden Ansprüche, **dadurch gekennzeichnet, dass** innerhalb des Staufachs mindestens eine Buchse (7) für ein Versorgungs- oder Signalkabel (23) angeordnet ist.

10. Verkleidungsteil für einen Fahrzeuginnenraum, umfassend ein Staufach nach einem der Ansprüche 1 bis 9.

11. Verkleidungsteil nach Anspruch 10, **dadurch gekennzeichnet, dass** es eine Instrumententafel (1) oder eine Mittelkonsole oder ein Teil einer Instrumententafel (1) oder einer Mittelkonsole ist.

## Claims

1. Storage compartment for a vehicle interior, comprising a cover (2), which can be pivoted between a completely closed and a maximally opened position, and a base (3) which is concealed thereunder when the cover (2) is closed,
wherein
the cover (2) can be locked at least within a partial region of a movement range between the completely closed and the maximally opened position in any intermediate position, **characterised in that**,
for clamping an object (6) between the base (3) and the cover (2) when the cover (2) is opened, a support (8) for the object (6) to be clamped between the base (3) and the cover (2) is arranged on the base (3) of the storage compartment, which support (8) can be pivoted upwards about at least one link.

2. Storage compartment according to claim 1, **characterised in that** the cover (2) can be pivoted upwards about a simple pivot axis (16) or a double link (4) or is articulated by means of a four-bar link.

3. Storage compartment according to any of the claims 1 or 2, **characterised in that** at least one link, about which the cover (2) can be pivoted upwards, has a link brake or a releasable lock which locks the link in a form fit in order to lock the cover (2) in the intermediate positions.

4. Storage compartment according to any of the claims 1 to 3, **characterised in that** the cover (2) is loaded by a spring force which opens or closes the cover (2).

5. Storage compartment according to any of the claims 1 to 4, **characterised in that** the cover (2) has, on an inner side orientated towards the base (3), a plurality of webs (21) which are disposed parallel to each other and to at least one link axis of the cover (2).

6. Storage compartment according to claim 5, **characterised in that** the webs (21) can be pressed in elastically and/or are covered with a flexible covering (22).

7. Storage compartment according to any of the preceding claims, **characterised in that** the support (8) has at least one retaining strap (10) for the object (6) to be retained and/or a support wall (9) provided with an adhesive pad or an adhesive film or a suction surface for a suction cup or a magnetic surface.

8. Storage compartment according to any of the preceding claims, **characterised in that** the support (8) comprises a plate (13) which can be mounted on a frame of the support (8) in two orientations which are different from each other by interchanging a front- and a rear-side (14, 15) of the plate (13), the plate (13) having, on the front-side (14), at least one retaining strap (10) and, on the rear-side (15), a surface formed by an adhesive pad or by an adhesive film or by a suction surface for a suction cup or by a magnetic surface.

9. Storage compartment according to any of the preceding claims, **characterised in that** at least one socket (7) for a supply or signal cable (23) is disposed within the storage compartment.

10. Trim part for a vehicle interior including a storage compartment according to one of the claims 1 to 9.

11. Trim part according to claim 10, **characterised in that** it is an instrument panel (1) or a central console or a part of an instrument panel (1) or of a central console.

## Revendications

1. Compartiment de rangement pour un habitacle de véhicule, comprenant un couvercle (2) pouvant être pivoté entre une position totalement fermée et une position ouverte au maximum et un fond (3) dissimulé en-dessous lorsque le couvercle (2) est fermé,
où le couvercle (2) peut être bloqué, au moins dans une zone partielle d'une plage de mouvement, entre la position totalement fermée et la position ouverte au maximum dans chaque position intermédiaire quelconque,
**caractérisé en ce que**, pour le serrage d'un objet (6) entre le fond (3) et le couvercle (2) ouvert, un support (8) sur le fond (3) du compartiment de rangement, pouvant pivoter vers le haut autour d'au moins une articulation, est disposé pour l'objet (6) à serrer entre le fond (3) et le couvercle (2) .

2. Compartiment de rangement selon la revendication 1, **caractérisé en ce que** le couvercle (2) peut être pivoté pour s'ouvrir autour d'un simple axe de pivotement (16), ou d'une articulation double (4), ou est articulé au moyen d'une quadruple articulation.

3. Compartiment de rangement selon l'une des revendications 1 ou 2, **caractérisé en ce qu'**au moins une articulation, autour de laquelle le couvercle (2) peut pivoter pour s'ouvrir, présente un frein d'articulation pour le blocage du couvercle (2) dans les positions intermédiaires ou un système de verrouillage amovible bloquant l'articulation par complémentarité des formes.

4. Compartiment de rangement selon l'une des revendications 1 à 3, **caractérisé en ce que** le couvercle (2) est sollicité par une force de rappel ouvrant ou fermant le couvercle (2).

5. Compartiment de rangement selon l'une des revendications 1 à 4, **caractérisé en ce que** le couvercle (2) présente au niveau d'une face intérieure orientée vers le fond (3) plusieurs tiges (21) disposées parallèlement les unes aux autres et par rapport à au moins un axe d'articulation du couvercle (2).

6. Compartiment de rangement selon la revendication 5, **caractérisé en ce que** les tiges (21) peuvent être insérées par pression de manière élastique, et/ou sont recouvertes d'un revêtement (22) souple.

7. Compartiment de rangement selon l'une des revendications précédentes, **caractérisé en ce que** le support (8) présente au moins une patte de maintien (10) pour l'objet (6) à tenir, et/ou une paroi d'appui (9) munie d'un coussinet de fixation, ou d'un film de fixation, ou d'une surface d'aspiration pour une ventouse, ou d'une surface aimantée.

8. Compartiment de rangement selon l'une des revendications précédentes, **caractérisé en ce que** le support (8) comprend une plaque (13), qui est à fixer sur un châssis du support (8) dans deux orientations différentes l'une de l'autre par l'échange des faces avant et arrière (14, 15) de la plaque (13), où la plaque (13) présente sur la face avant (14) au moins une patte de maintien (10) et sur la face arrière (15) une surface formée par un coussinet de fixation, ou par un film de fixation, ou par une surface d'aspiration pour une ventouse, ou par une surface aimantée.

9. Compartiment de rangement selon l'une des revendications précédentes, **caractérisé en ce qu'**au moins une prise (7) pour un câble d'alimentation ou de signalisation (23) est disposée à l'intérieur du Compartiment de rangement.

10. Pièce d'habillage pour un habitacle de véhicule comprenant un compartiment de rangement selon l'une des revendications 1 à 9.

11. Pièce d'habillage selon la revendication 10, **caractérisée en ce qu'**elle est un tableau de bord (1), ou une console centrale, ou une partie d'un tableau de bord (1) ou d'une console centrale.
